# EUROPÄISCHE PATENTSCHRIFT

(11) **EP 0 798 503 B1**
(45) Veröffentlichungstag und Bekanntmachung des Hinweises auf die Patenterteilung: **19.06.2002**
(21) Anmeldenummer: 97104732.9
(22) Anmeldetag: 20.03.1997
(51) Int. Cl.: F16L 3/04, B25C 5/08, F24D 3/14, F16B 15/00

(54) **Verfahren, Halter und Setzgerät zum Befestigen von Rohren**
Method, holder and setting device for fixing pipes
Procédé, support et dispositif de positionnement pour la fixation de tuyaux

(30) Priorität: 25.03.1996 DE 19611630
(43) Veröffentlichungstag der Anmeldung: 01.10.1997
(73) Patentinhaber: Poly Plast GmbH, 49448 Lemförde/Marl (DE)
(72) Erfinder:
(74) Vertreter: Busse & Busse Patentanwälte

(56) Entgegenhaltungen:
- EP-A- 0 794 391
- DE-A- 4 005 659
- DE-A- 4 009 573
- DE-A- 4 242 251
- US-A- 4 094 483

## Beschreibung

Die Erfindung betrifft ein Verfahren zur Befestigung von Rohren, insbesondere Fußbodenheizungsrohren, auf einer durchstechbaren Deckschicht, insbesondere von Isolierplatten oder -bahnen, einen Halter zur Befestigung von Rohren und ein Setzgerät hierzu.

Die Befestigung von Fußbodenheizungsrohren auf kaschierten Schaumstoffplatten erfolgt häufig mit Hilfe eines sogenannten Tackersystems aus Rohrhaltern, Setzgeräten und mit einer zur Verankerung der Halter mit einer geeigneten Deckschicht versehenen (Isolier-)Unterlage, bei dem mit Hilfe eines Setzgeräts U-förmige Halter oder Kunststoffclipse mit Widerhaken an den Schenkelenden über das zu befestigende Heizrohr in den Isolierschaum gedrückt werden und bei denen sich dann die Widerhaken im Schaum spreizen und sich bei Zugbelastung unter der kaschierten Folie verankern, (siehe z.B. DE-A-4 005 659 und DE-A-4 009 573).

Diese Rohrbefestigungsart hat sich aufgrund der schnellen und einfachen Montage sehr stark durchgesetzt. Es gibt eigentlich nur zwei nennenswerte Probleme bei diesem Verlegesystem. Zum einen muß die Kaschierfolie sehr stabil und reißfest sein, um eine sichere Fixierung des Rohres, das vor allem in Bogenbereichen starke Spannungen aufweist, zu gewährleisten. Häufig wird eine derartige Folie mit Netzen oder Geflechten verstärkt, was aber auf der anderen Seite natürlich zu einer Verteuerung führt. Zum anderen bewirkt die Rohrspannung im Bogenbereich, daß die Kunststoffnadeln einen Teil weit wieder aus dem Schaum gezogen werden, bis daß sich ihre Widerhaken unter der Folie gespreizt haben, wodurch das Rohr angehoben und in der Höhe nicht exakt fixiert ist. Bei allen bekannten Systemen beträgt diese erforderliche Ungenauigkeit in der Höhenfixierung mindestens 1 cm.

Durch den zunehmenden Einsatz sogenannter Fliesestriche, die nur noch extrem dünn sind, bei dem aus Sicherheitsgründen aber eine Mindestrohrüberdeckung erforderlich ist, führt die ungenaue Höhenfixierung dazu, daß eigentlich eine größere Estrichstärke erforderlich ist, was natürlich zu einer Verteuerung führt, oder aber die Einbettung in Estrich unzureichend bleibt.

Bei bisherigen Tackersystemen erfolgte die Verankerung dadurch, daß sich die Widerhaken der Kunststoffnadel beim Eindrücken in die kaschierte Isolierung an den Schaft annäherten und sich dann nach Durchstoßen der Folie im Schaumbereich erneut spreizten und dann nach einem gewissen Auszugsweg unter der Folie verankerten.

Wenn die Eindringtiefe und damit der Auszugsweg zu kurz gewählt wurden, spreizten sich die Widerhaken nicht ausreichend, so daß die Nadel durch das selbst in die Folie gestoßene Loch wieder herausrutschte. Auch die Flexibilität der Widerhaken stellte bisher ein großes Problem dar. Zu starre Widerhaken führten zu großen Löchern in der Folie. Zu flexible Widerhaken gaben unter Belastung zu stark nach, so daß das Rohr noch mehr ungewollt angehoben war.

Aufgabe der Erfindung ist es, die Festlegung von Heizrohren und anderen auf einer Boden-, Wand- oder Deckenfläche festzulegenden Rohre oder dgl. präziser, fester und belastbarer zu gestalten, ohne dabei an die Deckschicht höhere und verteuernde Ansprüche stellen zu müssen und ohne daß hinsichtlich der Halter oder ihrer Verlegung besonderer Aufwand getrieben werden müßte.

Gemäß der Erfindung wird diese Aufgabe durch ein Verfahren nach dem Anspruch 1 gelöst. Die besondere Handhabung der Halter, bei der diese in einem elastisch verformten Zustand durch die Deckschicht hindurch gesteckt werden und sich danach zu entspannen suchen, führt zu einer Verankerungsbewegung quer zur Einstechrichtung und parallel zur Deckschicht, mit der Widerhaken aus dem Bereich des beim Einstechen geformten Einstechlochs unter unbeschädigte und damit festere Bereiche der Deckschicht gelangen und damit gegen ein Herausziehen, gegebenenfalls auch gegen eine Aufweitung des Einstechlochs im Zuge einer Rißfortpflanzung besser gesichert sind. Gleichzeitig schafft die Verankerungsbewegung parallel zur Deckschicht die Möglichkeit, daß die Widerhaken nur bis knapp unter die Deckschicht bewegt werden und keinen erheblichen Rückweg zu einer Spreiz- und Verankerungsbewegung der Widerhaken benötigen, was herkömmlich zu einem Spielraum der Halter und der mit diesen festzulegenden Rohre führte und sowohl hinsichtlich der Sicherheit der Verankerung wie auch hinsichtlich der Präzision der Rohrverlegung nachteilig war.

Die erfindungsgemäße Aufgabe wird weiterhin durch einen Halter nach dem Anspruch 4 gelöst, bei dem die Schenkel in einer gemeinsamen Ebene der U-Form um mehr als 5° zu einer gemeinsamen Symmetrie-Mittelebene angestellt, d.h. dann zueinander um 10° divergierend oder konvergierend ausgerichtet sind.

Diese Gestaltung ermöglicht es, die Halter vorgespannt mit etwa parallelen U-Schenkeln durch eine Deckschicht hindurchzustechen und den Halter sich danach entspannen zu lassen, wobei die Widerhaken in einer deckschichtparallelen Verankerungsbewegung unter der Deckschicht Halt finden können.

Die erfindungsgemäße Aufgabe wird weiterhin mit einem Setzgerät nach dem Anspruch 11 gelöst, welches aufgrund seiner Gestaltung eine elastische Verformung der Halter mit Hilfe zumindest eines Verformungselements am Setzschacht des Setzgerätes bewirkt.

Bei dem neuen Tackersystem ist die Nadel bzw. der Halter im unbelasteten Zustand vorzugsweise gespreizt. Durch die Mechanik beim Tackervorgang wird die Spreizung während des Eindrückens der Nadel vorübergehend aufgehoben. Die Nadel wird nur bis unmittelbar über die Oberkanten ihrer Widerhaken in den kaschierten Schaum gedrückt. Durch die Rückstellkraft des Kunststoffes spreizen sich die Nadelschenkel nun erneut, so daß die jeweiligen äußeren Widerhaken unter die aufkaschierte Deckschicht des Schaums gedrückt werden. Dieser Effekt wird durch die Eigenflexibilität der Widerhaken noch verstärkt.

Durch einen geringen Spreizwinkel der Widerhaken, der durch die Eigenspreizung der Nadel ausreichend ist, um nach dem Eindrückvorgang direkt seitlich unter die Deckschicht zu gelangen, wird ein Großteil der Kraft durch die Rohrspannung aufgefangen, da der Widerhaken sich nur geringfügig seitlich spreizt und die meiste Kraft direkt als Druck auf die Spitze überträgt.

Beim angegebenen maximalen Spreizwinkel von 25 Grad kann der Widerhaken ca. die vierfache Kraft der Eigenstabilität aufnehmen durch diese Kraftumlenkung.

Dadurch, daß sich die Nadel bzw. der Halter direkt nach dem "Tackervorgang" (Setzvorgang) unter der Kaschierfolie verankert, wird ein teilweises Herausziehen verhindert, was einerseits aufgrund der Estrichstärke wichtig ist, auf der anderen Seite führt ein teilweises Herausziehen der Nadel bei herkömmlichen Systemen dazu, daß sich, bedingt durch den schräg seitlichen Druck, durch die Spannung des Rohres im Bogenbereich eine Hebelwirkung ergibt, die dazu führt, daß die Nadel leichter ausreißt. Dieses führte herkömmlich zum Einsatz teurerer und widerspenstiger verstärkter Folien als Deckschichten, die bei dem neuen System durch die Vermeidung der Hebelwirkung entbehrlich sind.

Ausführungsbeispiel für den Gegenstand sind in der Zeichnung dargestellt und nachfolgend näher beschrieben. In der Zeichnung zeigen:
- Fig. 1: Frontansicht eines Halters,
- Fig. 2: Ansicht eines Halters im Einsatz mit Schnitt durch ein Rohr und eine Isolierstoffplatte mit Deckschicht,
- Fig. 3: Schnitt durch ein Setzgerät mit einem Halter nach Fig. 1 und 2 in Frontansicht und mit schnittbildlicher Wiedergabe eines Rohrs und einer Isolierstoffplatte mit Deckschicht,
- Fig. 4: Schnitt nach Linie IV-IV in Fig. 3, ohne Rohr und Isolierstoffplatte und
- Fig. 5: Schnitt durch ein Setzgerät entsprechend Fig. 3 zu einer abgewandelten Ausführungsform.

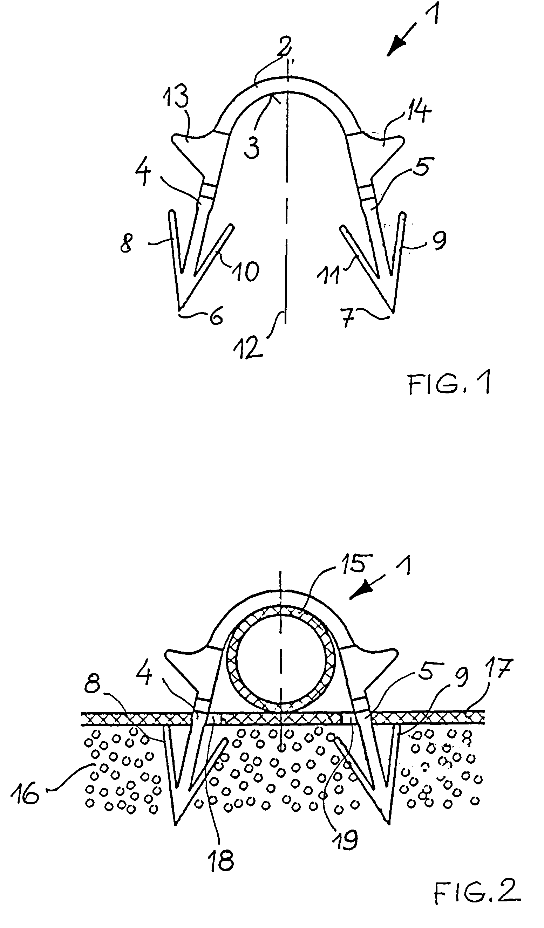

Der in Fig. 1 dargestellte, insgesamt mit 1 bezeichnete Halter für Fußbodenheizungsrohre - auch "Kunststoffclips" oder "Tackernadel" genannt - ist im wesentlichen U-förmig mit einem gekrümmten U-Steg 2, der mit einer bogenförmigen inneren Anlagefläche 3 an das Kreisprofil eines zu verlegenden Rohres angeglichen ist und beidseitig in U-Schenkel 4 bzw. 5 übergeht, die spitze Einstechenden 6,7 und von diesen schräg nach hinten gepfeilte Widerhaken 8,9 an den Außenseiten und 10,11 an den Innenseiten aufweisen. In der Grundform ist der Halter 1 spiegelbildlich zu einer Symmetrie-Mittelebene 12 gestaltet. Er weist weiterhin an den U-Schenkeln 4,5 im Übergang zum U-Steg 2 Schultern 13,14 auf, die, wie noch veranschaulicht werden wird, einem Setzwerkzeug Angriffsschultern darbieten.

Die insofern übereinstimmend mit Haltern vorbekannter Ausführungsform beschriebene Gestaltung zeigt in neuer Weise eine Anstellung der U-Schenkel 4,5 bzw. bezüglich der Mittelebene 12, die neu und wesentlich ist. Die winklige Anstellung der U-Schenkel liegt in Form einer Spreizung nach außen vor, wenngleich eine konvergierende Anstellung grundsätzlich, wenngleich nicht mit gleich großen Vorteilen, verwendbar erscheint.

Die winklige Anstellung der U-Schenkel 4,5 zueinander schafft gezielt eine von der beim Einstechen anzustrebenden Konfiguration mit zueinander parallelen U-Schenkeln eine Form mit besonderen günstigen Verankerungen.

In Fig. 2 ist der Halter 1 in einer Einsatzstellung gezeigt, bei der er ein Rohr 15 umfaßt und mit seinen U-Schenkeln 4,5 in eine Isolierstoffplatte 16 eingreift und dabei eine Deckschicht 17 hintergreift. Maßgeblich für die Verankerung ist in erster Linie die Deckschicht 17, die eine entsprechende Verankerung selbst auch ohne die Isolierstoffplatte 16 bieten könnte. Insofern muß unter "Deckschicht" eine Verankerungsschicht in Form einer Folie, eines Gewebes oder dgl. verstanden werden, wobei eine Unterlegung oder ein Träger für die Deckschicht wie die Isolierplatte 16 eigentlich entbehrlich ist. Die Isolierplatte 16 ist üblicherweise eine Schaumstoffplatte, könnte aber in gleicher Weise durch anderes Material wie Faservlies oder dgl. realisiert sein, wobei die hier zunächst in Betracht gezogenen Isolierstoffplatten regelmäßig leicht und für eine Verankerung von Haltern der in Betracht zu ziehenden Art nur unzulänglich fest sind. Es versteht sich auch, daß solche Platten in vorgegebener Einheitsgröße, in erst vor Ort zu konfektionierenden Bahnen oder auch in losen Lagen bestehen können.

Der Halter 1 hintergreift in der Einsatzstellung gemäß Fig. 2 die Deckschicht 17 mit seinen außenliegenden Widerhaken 8,9 spielarm, wobei er oberseitig mit seiner Anlagefläche 3 (Fig. 1) am Rohr anliegt. Die dadurch veranschaulichte knappe Dimensionierung wird mit der besonderen Gestaltung und Verwendung des Halters 1 möglich, der in einem elastisch verformten Zustand mit parallelen U-Schenkeln 4,5 die Deckschicht 17 eindringt und dann sich wieder in Richtung auf die Fig. 1 gezeigte Ausgangslage zu entspannen sucht, wobei die U-Schenkel 4,5 sich an die voneinander entfernten Ränder von Einstechlöchern 18,19 gelangen und die außenliegenden Widerhaken 8,9 darüber hinaus in horizontaler Richtung unterseitig längs der Deckschicht 17 vom Lochrand weg bewegen und sich etwa senkrecht gegen die Deckschicht abstützen. Dies ist eine besonders stabile Konfiguration, bei der die Widerhaken nur geringe seitliche Kräfte abzufangen haben und relativ weit von den Löchern 18,19 entfernt sind.

Einer Verlagerungstendenz des Rohres 15 nach oben ist auf diese Weise wirksam begegnet. Auch ein seitliches Ausweichen des Rohres wird gut abgefangen, zumal die schräg nach außen gerichteten U-Schenkel 4,5 schräg in Belastungsrichtung, d.h. in Zugrichtung und damit günstig verlaufen.

Bei Vorstehendem ist ersichtlich, daß die Verankerung eines Halters 1 nicht etwa wie bei herkömmlichen Haltern den Widerhaken allein zufällt, sondern daß eine gesteuerte Verformung des Halters insgesamt eine sehr viel wirksamere Verhakungsbewegung auslöst mit vorwiegend horizontaler Wirkrichtung, so daß die Widerhaken im Hinblick auf die Verankerungsfunktion auch relativ starr ausgebildet sein können und ihre Nachgiebigkeit nur ein Anlegen an den zugehörigen U-Schenkel mit Rücksicht auf die klein zu haltenden Einstechlöcher wichtig erscheint.

Erkennbar ist auch, daß das funktionelle Schwergewicht den außenliegenden Widerhaken 8,9 zukommt, während die innenliegenden Widerhaken 10,11 zwar die Spreizbewegung nach dem Durchstechen der Deckschicht 17 unterstützen, hinsichtlich der Verankerung selbst aber entbehrlich sind.

Ein solcher Halter habe einen Anstellwinkel der U-Schenkel 4,5 zur Symmetrie-Mittelebene 12 von 5° bis 25°, im vorliegenden Fall von etwa 10°, so daß die beiden U-Schenkel zueinander unter einem Winkel von 20° stehen. Die Widerhaken bilden einen Winkel von etwa 25° zu den Schenkeln, an denen sie sitzen.

Die Verarbeitung solcher Halter soll zweckmäßig mit Hilfe von Setzgeräten erfolgen, wie sie bereits üblicherweise Verwendung finden, in dem etwa aus einem Halter-Magazin Halter nacheinander in einen Setzschacht einlaufen, von wo sie mittels eines von Hand, pneumatisch oder elektrisch betriebenen Druckstempels nach unten hin ausgeschoben werden. Ein solches Setzgerät muß für den vorliegenden Fall neben den herkömmlichen Funktionen auch die gewünschte elastische Verformung des Halters beim Einstechen erzielen.

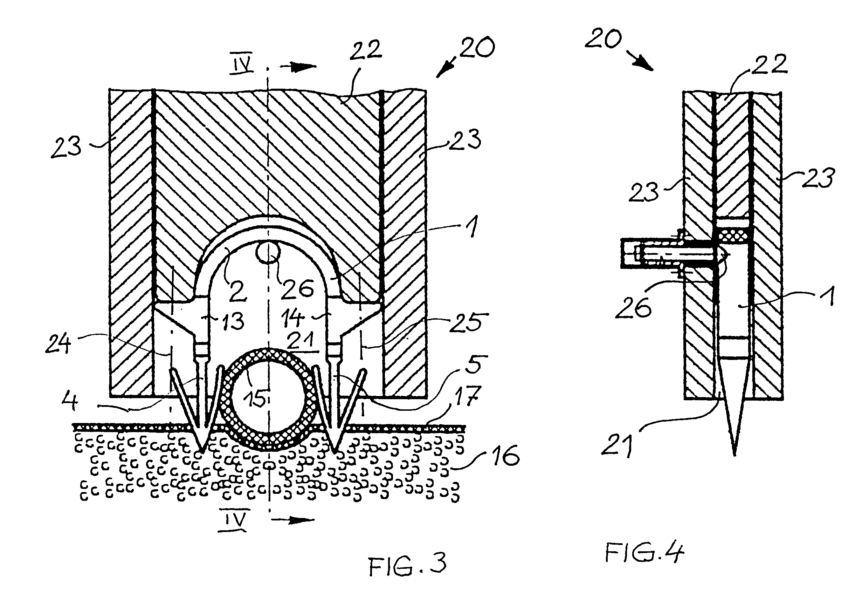

In Fig. 3 und 4 ist ein insgesamt mit 20 bezeichnetes Setzgerät nur partiell im Bereich eines Setzschachtes 21 mit darüber gleitbeweglich gelagertem Druckstempel 22 innerhalb eines umschließenden geräteseitigen Gehäuseteils 23 gezeigt, wobei der Druckstempel 22 auf die Schultern 13,14 des Halters 1 drückt, wie dies grundsätzlich auch bereits bei vorbekannten Haltern geschieht. Im vorliegenden Fall ist allerdings wichtig, daß der Druckstempel nur an diesen Schultern 13,14 anliegt und bei seiner Vorschubbewegung außenliegende Wirklinien 24,25 hinsichtlich resultierender Druckkräfte schafft, während er im Bereich des gebogenen U-Stegs 2 nicht anliegt, sondern einen freien Ausweichraum vorsieht.

In dem mittleren Bereich ist am Setzgerät ein rückhaltendes Verformungselement 26 in Form eines von der Seite in den Setzschacht hineinragenden Hemmnocken vorgesehen, der den Halter 1, von dem Druckstempel 22 nach unten herausgeschoben, in der Mitte zurückhält und zusammenbiegt, so daß er eine etwa parallele Schenkelstellung einnimmt, bis die Einstechenden 6,7 des Halters 1, wie in Fig. 3 veranschaulicht, die Deckschicht 17 durchstochen haben. Beim weiteren Einstechen des Halters kann dessen verspannte Stellung sich zunächst nicht lösen, da er von den Einstechlöchern her festgelegt ist, bis die Widerhaken, insbesondere die äußeren Widerhaken 8,9, die Deckschicht 17 durchquert haben. Somit kann der Hemmnocken 26 starr angeordnet sein, so daß der Halter mit seinem U-Steg 2 nur unter elastischer und auch plastischer Verformung über diesen hinweg zu bringen ist. Es versteht sich aber, daß der Hemmnocken (oder ein Paar einander gegenüberstehender) auch federnd gelagert sein kann, um die Hemmwirkung über Federkräfte zu dosieren.

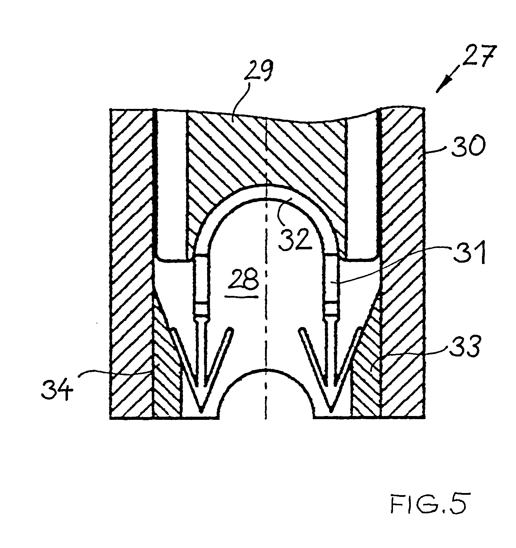

Eine alternative Ausführungsform für ein Setzgerät 27 mit einem Setzschacht 28 und einem Druckstempel 29 ist in Fig. 5 veranschaulicht, wobei ein Halter ein seitlich umschließendes Gehäuse 31 vorgesehen ist. Ein hier zu verwendender Halter 32 ist gegenüber dem Halter 1 mit Wegfall der Schulterfortsätze 13,14 vereinfacht. Der Druckstempel ist so gestaltet, daß er auf einen U-Steg 33 des Halters 32 drückt und dessen Außenfläche mit einer konkaven Druckstempelfläche angepaßt ist.

Die gewünschte Verformung wird hier durch beidseitige schräge Gleitflächen 34,35 erzielt, die den Halter aus einer (nicht dargestellten) entspannten Ausgangslage beim Vorschub des Druckstempels 29 von beiden Seiten zusammenzwängen, so daß er mit etwa parallelen U-Schenkeln in eine Deckschicht einzustechen ist.

## Patentansprüche

1. Verfahren zur Befestigung von Rohren (15), insbesondere Fußbodenheizungsrohren, auf einer durchstechbaren Deckschicht (17), insbesondere Kaschierfolie, auf Isolierplatten oder -bahnen, wobei im wesentlichen U-förmig hergestellte, an den Schenkeln (4,5) mit Einstechenden (6,7) und außenliegenden Widerhaken (8,9,10,11) versehene Halter (1,31) mit Hilfe eines mit einem Druckstempel (22,28) versehenen Setzgeräts (20,27) über das Rohr (15) und in die Deckschicht (17) eingestochen und hinter dieser mit Hilfe der Widerhaken festgelegt werden, **dadurch gekennzeichnet, daß** die Halter (1,31) vor dem Einstechen in die Deckschicht elastisch aus einer gespreizten Ausgangsform in eine Einstechform mit etwa parallelen Schenkeln und zu einer Abstandsveränderung der Einstechenden (6,7) verformt und vorgespannt und nach dem Durchtritt der Widerhaken (8,9) durch die Deckschicht (17) zur Bewegung in Richtung der Widerhaken freigegeben werden.

2. Verfahren nach Anspruch 1, **dadurch gekennzeichnet, daß** die Halter (1,31) bei der Einstechbewegung durch den Druckstempel (22,28) von Verformungselementen (26,33) des Setzgeräts (20,27) beaufschlagt werden.

3. Halter (1,31) zur Durchführung des Verfahrens nach einem der Ansprüche 1 und 2, dessen im wesentlichen U-förmige Gestaltung zwei Schenkel (4,5) mit Einstechenden (6,7) und außenliegenden Widerhaken (8,9,10,11) umfaßt und der aus elastischem Material, insbesondere Kunststoff, geformt ist, **dadurch gekennzeichnet, daß** die Schenkel (4,5) in einer gemeinsamen Ebene schräg unter einem Winkel von mehr als 5° zu einer gemeinsamen Symmetrie-Mittelebene (12) angestellt sind, wobei an den Schenkeln Widerhaken (8,9) mit annähernd paralleler Ausrichtung zur Mittelebene (12) angeordnet sind, deren Enden mit einer Verbindungslinie, die bei Verankerung der Halter in einer Deckschicht (17) etwa an deren Unterseite liegt, einen etwa dem Durchmesser eines zu befestigenden Rohres (15) entsprechenden Abstand von einer inneren Anlagefläche (3) des Halters (1) aufweisen.

4. Halter (1,31) nach Anspruch 3, **dadurch gekennzeichnet, daß** die Schenkel (4,5) unter einem Winkel von maximal 25° angestellt sind.

5. Halter (1,31) nach Anspruch 3 oder 4, **dadurch gekennzeichnet, daß** die Schenkel (4,5) unter einem Winkel von etwa 10° angestellt sind.

6. Halter (1,31) nach Anspruch 3, **dadurch gekennzeichnet, daß** die Widerhaken (8,9,10,11) einen Winkel von etwa 25° zu den zugehörigen Schenkeln (4,5) bilden.

7. Setzgerät (20,27) zur Durchführung des Verfahrens nach einem der Ansprüche 1 und 2, bei dem ein über ein Rohr (15) zu setzender U-förmiger Halter (1,31) mit Einstechenden in eine Deckschicht (17) einzustecken und in dieser mittels Widerhaken (8,9,10,11) zu verankern ist, wobei der Halter (1,31) mittels eines Druckstempels (22,29) in einem Setzschacht (21,28) herausgedrückt wird, **dadurch gekennzeichnet, daß** der Setzschacht (21,28) zumindest ein mit dem Halter (1,31) in Eingriff gelangendes Verformungselement (26,33,39) aufweist, das den Halter (1,31) beim Herausdrücken aus einer gespreizten Ausgangsform in eine Einstechform mit etwa parallelen Schenkeln umformt.

8. Setzgerät (20) nach Anspruch 7, **dadurch gekennzeichnet, daß** der Setzschacht (21) zumindest ein den Halter in einem mittleren Bereich zurückhaltendes Verformungselement (26) aufweist und daß der Druckstempel (22) zwei mit ihren Wirklinien (24,25) im Abstand voneinander und von dem Verformungselement (26) vorgesehene Druckflächen aufweist.

9. Setzgerät (27) nach Anspruch 7, **dadurch gekennzeichnet, daß** der Setzschacht (28) als Verformungselemente einander gegenüberliegende schräge seitliche Gleitflächen (33,34) aufweist, die auf die U-Schenkel bzw. auf Widerhaken des zu setzenden Halters (31) beim Herausdrücken einwirken.

## Claims

1. Method of fitting pipes (15), in particular floor heating pipes, to a cover layer (17) that can be pierced through, particularly laminated film, to insulating panels or strips, in which holders (1,31) which are manufactured essentially in a U-shape and are provided on the legs (4, 5) with piercing ends (6, 7) and external barbs (8, 9, 10, 11) are inserted by means of a setting device (20, 27) fitted with a piston (22, 28) over the pipe (15) and into the cover layer (17) and are secured behind it by means of the barbs, **characterised in that** the holders (1, 31) are deformed and pre-stressed elastically from an initial expanded shape to a piercing shape, with roughly parallel legs, and for the purpose of varying the distance between the piercing ends (6, 7), before they are inserted in the cover layer, and are released so that they move in the direction of the barbs after the barbs (8, 9) have penetrated the cover layer (17).

2. Method according to claim 1, **characterised in that** the holders (1, 31) are loaded by deformation elements (26, 33) of the setting device (20, 27) during the insertion movement performed by the piston (22, 28).

3. Holder (1, 31) for implementing the method according to one of claims 1 and 2, whose essentially U-shaped design comprises two legs (4, 5), with piercing ends (6, 7) and external barbs (8, 9, 10, 11), and which is formed from elastic material, particularly plastic, **characterised in that** the legs (4, 5) are arranged in a common plane at an oblique angle of over 5° to a common central plane of symmetry (12), barbs (8, 9) aligned almost in parallel to the central plane (12) being arranged on the legs, the ends of which barbs being arranged at a distance from an inner contact face (3) of the holder (1) approximately equal to the diameter of a pipe (15) to be secured with a connecting line which lies in a cover layer (17), approximately on its underside, when the holders are anchored.

4. Holder (1, 31) according to claim 3, **characterised in that** the legs (4, 5) are arranged at a maximum angle of 25°.

5. Support (1, 31) according to claim 3 or 4, **characterised in that** the legs (4, 5) are arranged at an angle of approximately 10°.

6. Support (1, 31) according to claim 3, **characterised in that** the barbs (8, 9, 10, 11) form an angle of approximately 25° to the associated legs (4, 5).

7. Setting device (20, 27) for implementing the method according to one of claims 1 and 2, in which a U-shaped support (1, 31) with piercing ends, to be set over a pipe (15), must be inserted in a cover layer (17) and anchored in it by means of barbs (8, 9, 10, 11), and in which the support (1, 31) is pushed out by means of a piston (22, 29) in a setting shaft (21, 28), **characterised in that** the setting shaft (21, 28) exhibits at least one deformation element (26, 33, 39) engaging with the holder (1, 31), which element transforms the holder (1, 31) into a piercing shape with roughly parallel legs when pushed out of an expanded initial shape.

8. Setting device (20) according to claim 7, **characterised in that** the setting shaft (21) exhibits at least one deformation element (26) retaining the holder in a central area, and **in that** the piston (22) exhibits two pressure surfaces with their lines of action (24, 25) at some distance from each other and from the deformation element (26).

9. Setting device (27) according to claim 7, **characterised in that** the setting shaft (28) exhibits oblique lateral opposing sliding faces (33, 34) as deformation elements which act on the U-legs and barbs of the holder (31) to be set whilst they are pushed out.

## Revendications

1. Procédé de fixation de tuyaux (15), en particulier de tuyaux de chauffage de sols, sur une couche de recouvrement perforable (17), en particulier une feuille contre-collée, sur des plaques ou des bandes isolantes, dans lequel des supports (1,31) fabriqués sensiblement en U et pourvus, sur les ailes (4,5), de pointes perforantes (6,7) et de crochets d'ancrage extérieurs (8,9,10,11), sont fixés par dessus le tuyau (15) à l'aide d'un appareil de pose (20,27) pourvu d'un poinçon (22,28), passés par perforation à travers la couche de recouvrement (17) et accrochés derrière celle-ci à l'aide des crochets d'ancrage, **caractérisé en ce que** les supports (1,31) sont, avant le passage par perforation à travers la couche de recouvrement, déformés de manière élastique d'une forme de départ déployée à une forme de perforation avec des ailes plus ou moins parallèles, précontraints par modification de la distance des pointes perforantes et libérés, après le passage des crochets d'ancrage (8,9) à travers la couche de recouvrement (17), pour se déplacer dans la direction des crochets d'ancrage.

2. Procédé selon la revendication 1, **caractérisé en ce que** les supports (1,31) sont sollicités par des éléments de déformation (26,33) de l'appareil de pose (20,27) lors du mouvement de perforation par le poinçon (22,28).

3. Support (1,31) pour réaliser le procédé selon l'une quelconque des revendications 1 et 2, dont la conformation sensible en U comprend deux ailes (4,5) pourvues de pointes perforantes (6,7) et de crochets d'ancrage extérieurs (8,9,10,11) et qui est constitué d'un matériau élastique, en particulier un matériau synthétique, **caractérisé en ce que** les ailes (4,5) sont disposées dans un plan commun incliné sous un angle de plus de 5° par rapport à un plan central de symétrie commun (12), les ailes portant les crochets d'ancrage (8,9) dans une direction approximativement parallèle au plan central (12), crochets d'ancrage dont les extrémités présentent, avec une ligne de jonction qui, lors de l'ancrage des supports dans une couche de recouvrement (17), se trouve plus ou moins sur sa face inférieure, une distance correspondant plus ou moins au diamètre d'un tuyau (15) à fixer par rapport à une surface de support intérieure (3) du support (1).

4. Support (1,31) selon la revendication 3, **caractérisé en ce que** les ailes (4,5) sont disposées sous un angle de 25° au maximum.

5. Support (1,31) selon la revendication 3 ou 4, **caractérisé en ce que** les ailes (4,5) sont disposées sous un angle d'environ 10°.

6. Support (1,31) selon la revendication 3, **caractérisé en ce que** les crochets d'ancrage (8,9,10,11) forment un angle d'environ 25° avec les ailes associées (4,5).

7. Appareil de pose (20,27) pour réaliser le procédé selon l'une quelconque des revendications 1 et 2, dans lequel un support (1,31) en forme de U à poser par dessus un tuyau (15) peut être enfiché par des pointes perforantes dans une couche de recouvrement (17) et ancré dans celle-ci par des crochets d'ancrage (8,9,10,11), dans lequel le support (1,31) est refoulé dans un puits de pose (21,28) par un poinçon (22,29), **caractérisé en ce que** le puits de pose (21,28) présente au moins un élément de déformation (26,33,39) coopérant avec le support (1,31), ledit élément de déformation déformant le support (1,31) lors du refoulement d'une forme de départ déployée en une forme de perforation avec des ailes plus ou moins parallèles.

8. Appareil de pose (20) selon la revendication 7, **caractérisé en ce que** le puits de pose (21) présente au moins un élément de déformation (26) qui bloque le support dans une zone centrale et **en ce que** le poinçon (22) présente deux surfaces de pression pourvues de leurs lignes actives (24,25) à distance l'une de l'autre et de l'élément de déformation (26).

9. Appareil de pose (27) selon la revendication 7, **caractérisé en ce que** le puits de pose (28) présente comme éléments de déformation des surfaces glissantes latérales (33,34) inclinées l'une par rapport à l'autre, qui, lors du refoulement, agissent sur les ailes du U, ou selon le cas sur les crochets d'ancrage du support à poser (31).
